# EUROPÄISCHE PATENTSCHRIFT

(11) **EP 1 396 407 B1**
(45) Veröffentlichungstag und Bekanntmachung des Hinweises auf die Patenterteilung: **27.07.2005**
(21) Anmeldenummer: 03450149.4
(22) Anmeldetag: 18.06.2003
(51) Int. Cl.: B61B 12/00, A47C 7/74

(54) **Seilbahnanlage mit einem Trag- und Förderseil und mit einer Vielzahl von an dieses ankuppelbaren Sesseln**
Cableway installation with a single supporting and hauling cable and a plurality of chairs connectable thereto
Installation de téléphérique avec un câble porteur et transporteur et une pluralité de sièges pouvant y être accouplé

(30) Priorität: 03.09.2002 AT 13122002
(43) Veröffentlichungstag der Anmeldung: 10.03.2004
(73) Patentinhaber: Innova Patent GmbH, 6960 Wolfurt (AT)
(72) Erfinder: Hinteregger, Christoph, Dipl. Ing., 6922 Wolfurt (AT)
(74) Vertreter: Atzwanger, Richard, Dipl.-Ing.

(56) Entgegenhaltungen:
- EP-A- 0 678 433
- EP-A- 0 760 320
- DE-A- 19 803 934
- DE-U- 29 501 389
- FR-A- 1 592 801

## Beschreibung

Die gegenständliche Erfindung betrifft eine Seilbahnanlage mit einem Trag- und Förderseil und mit einer Vielzahl von Sesseln, welche mit Kupplungseinrichtungen versehen sind, mittels welcher sie an das Trag- und Förderseil ankuppelbar sind, wobei die Sessel mit elektrischen Heizeinrichtungen ausgebildet sind

Es ist bekannt, die Sessel von Seilbahnanlagen mit verschwenkbaren Hauben auszubilden, durch welche deren Sitze während des Betriebes der Seilbahnanlage gegenüber ungünstigen klimatischen Einflüssen, z.B. gegenüber Schneefall, geschützt werden können. Da durch derartige Hauben jedoch nur ein begrenzter Schutz der Sitzflächen gegenüber Kälte erzielt wird, können bei niedrigen Temperaturen, welche insbesondere bei hochgelegenen Seilbahnanlagen auftreten können, sehr starke Abkühlungen der Sitzflächen der Sessel eintreten. Im Hinblick darauf, dass an den Komfort von Seilbahnanlagen immer größere Anforderungen gestellt werden, stellt dies somit für den Betrieb von Seilbahnanlagen mit Sesseln einen maßgeblichen Nachteil dar.

Die FR-A 1592801 offenbart weiters eine Seilbahnanlage, deren Sessel durch Infrarotheizgeräte beheizbar sind. Diese bekannte Einrichtung ist jedoch insoferne nicht den Erfordernissen entsprechend, da die Sitze nur so lange beheizbar sind, als sich auf diesen keine Passagiere befinden. Sobald sich demgegenüber auf den Sesseln Passagiere befinden, werden nicht die Sitze, sondern die Passagiere mit Wärme beaufschlagt.

Da die Beheizung der Sessel durch Infrarotstrahler im Vergleich zu einer unmittelbaren Beheizung der Sitze sehr unwirtschaftlich ist, erfordern weiters derartige Infrarotstrahler einen Energiebedarf, welcher durch Batterien nicht gedeckt werden kann. Vielmehr kann dieser Energiebedarf gemäß der zitierten Literaturstelle nur durch Elektrogeneratoren bzw. durch Gasspeicher gedeckt werden. Zudem wird darauf verwiesen, dass die Bekleidung der Passagiere so beschaffen sein muss, dass die Passagiere auch außerhalb der Seilbahnanlage vor Kälte geschützt sind, weswegen eine Erwärmung der auf den Sesseln befindlichen Passagiere keinesfalls erforderlich und allenfalls sogar unerwünscht ist.

Aus den vorstehenden Darlegungen erweist es sich, dass durch die aus dieser Literaturstelle bekannte Einrichtung den technischen Erfordernissen keinesfalls entsprochen wird.

Es ist weiters bekannt, eine Seilbahnkabine mittels Warmluft zu beheizen. Eine derartige Einrichtung ist jedoch auf die Beheizung der Sitze der einzelnen Sessel einer Seilbahnanlage nicht übertragbar. Zudem ist es bei Kraftfahrzeugen bekannt, die Sitze zu beheizen. Da jedoch in Kraftfahrzeugen einerseits ein Antriebsmotor und andererseits eine von einer Lichtmaschine gespeiste Batterie zwingend erforderlich sind, handelt es sich dabei um einen von Seilbahnanlagen so weit abliegenden Stand der Technik, dass eine Übertragung der bekannten Sitzheizung von einem Kraftfahrzeug auf die Sessel einer Seilbahnanlage keinesfalls naheliegend ist.
Insoweit als schließlich die Beheizung eines Rollstuhles betroffen ist, liegt insoferne ein maßgeblicher Unterschied vor, als ein Rollstuhl nicht schienengebunden ist, sodass für die Speisung der Batterie keine besonderen Maßnahmen getroffen zu werden brauchen.

Der gegenständlichen Erfindung liegt die Aufgabe zugrunde, die Sitze der Sessel einer Seilbahnanlage zu beheizen, um hierdurch für die Passagiere einen besondere Komfort zu bewirken, wobei weiters Maßnahmen getroffen werden müssen, um die erforderliche Speisung der Batterie zu gewährleisten. Diese Aufgaben werden erfindungsgemäß dadurch gelöst, dass die Sitze der Sessel mit Heizelementen ausgebildet sind, dass zudem die Sessel mit Batterien versehen sind, durch welche diese Heizelemente speisbar sind und dass weiters Einrichtungen zur Speisung der Batterien vorgesehen sind.

Da hierdurch die Sitze der Sessel beheizbar sind, können sie sowohl vor dem Besteigen durch die Passagiere als auch während der Benützung durch die Passagiere beheizt werden, wodurch der angestrebte Komfort erzielt wird.

Vorzugsweise sind die Sessel mit Steuereinrichtungen ausgebildet, durch welche eine Steuerung der Beheizung der Sitze erfolgt. Weiters sind vorzugsweise in den Stationen Stromschienen vorgesehen, mittels welcher die Aufladung der Batterien während der Garagierung der Sessel erfolgt. Alternativ dazu oder zusätzlich können weites Stromschienen vorgesehen sein, mittels welcher die Aufladung der Batterien während der Bewegung der Sessel durch die Stationen hindurch erfolgt. Schließlich können die Sessel mit photovoltaischen Elementen ausgebildet sein, welche zur Aufladung der Batterien dienen.
Ein Verfahren zum Aufladen der Batterien, welche an den Sesseln von Seilbahnanlagen vorgesehen sind und welche zur Beheizung der Sitze dienen, besteht erfindungsgemäß darin, dass die Sessel mit Stromabnehmern ausgebildet sind, welchen in den Stationen Stromleiter zugeordnet sind, wobei die Batterien während der Durchfahrt der Sessel durch die Stationen hindurch mit Strom gespeist werden.

Der Gegenstand der Erfindung ist nachstehend anhand von in der Zeichnung dargestellten Ausführungsbeispielen näher erläutert. Es zeigen:
- Fig.1: einen in einer Station befindlichen Sessel einer erfindungsgemäßen Seilbahnanlage, in Vorderansicht;
- Fig.1a: das Detail A der Fig. 1, in gegenüber Fig. 1 vergrößertem Maßstab;
- Fig.2: einen auf der Strecke befindlichen Sessel einer erfindungsgemäßen Seilbahnanlage, in Vorderansicht;
- Fig.2a: den Sessel gemäß Fig. 2, in Seitenansicht;
- Fig.3: eine zweite Ausführungsführungsform eines Sessels einer erfindungsgemäßen Seilbahnanlage, in Vorderansicht;
- Fig.3a: den Sessel gemäß Fig. 3, in Seitenansicht;
- Fig.4: ein dritte Ausführungsführungsform eines Sessels einer erfindungsgemäßen Seilbahnanlage, in Vorderansicht;
- Fig.4a: den Sessel gemäß Fig 4, in Seitenansicht;
- Fig.5: eine bei einer erfindungsgemäßen Seilbahnanlage vorgesehene Speicheranlage für eine Vielzahl von Sesseln, in Draufsicht; und
- Fig.6: die Sitzfläche eines Sessels einer erfindungsgemäßen Seilbahnanlage in axonometrischer Darstellung.

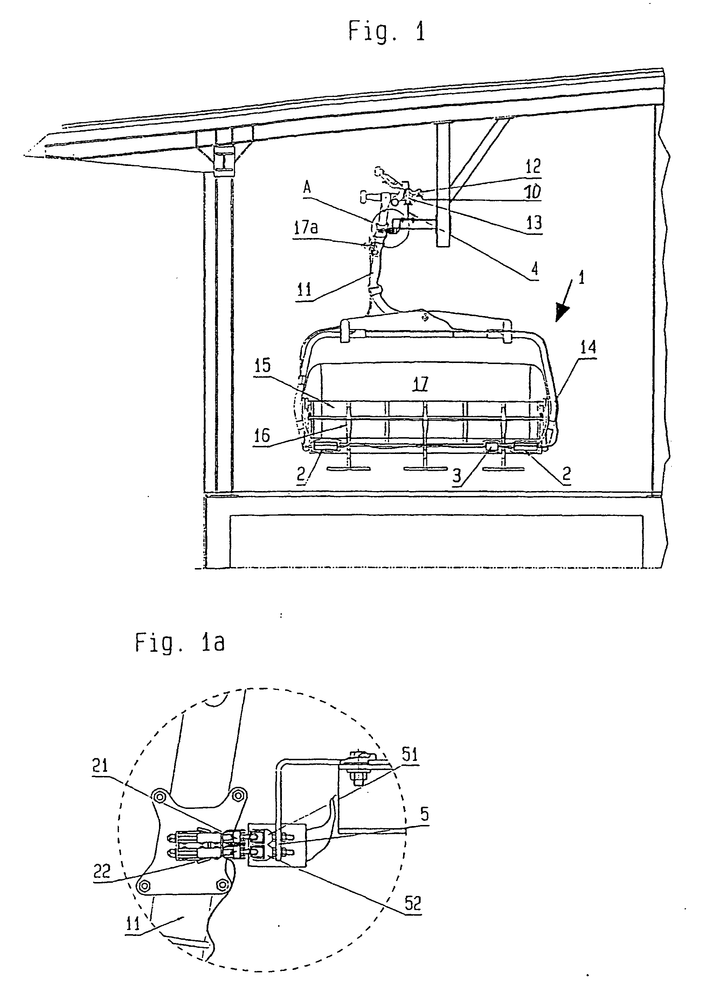

In Fig. 1 ist eine Station einer erfindungsgemäßen Seilbahnanlage dargestellt, in welcher sich ein Sessel 1 für sechs Personen befindet. Dieser Sessel 1 besteht aus einer Tragstange 11, an deren oberen Ende eine Kupplungseinrichtung 12 und ein Laufwerk 13 vorgesehen sind, und aus einem Traggestell 14, auf welchem sich eine Sitzbank 15 befindet und an welchem ein Schließbügel 16 verschwenkbar gelagert ist. Zudem ist der Sessel 1 mit einer Haube 17 ausgebildet, welche mittels einer Steuereinrichtung 17a verschwenkbar ist.

Mittels der Kupplungseinrichtung 12 ist der Sessel 1 an das Trag- und Förderseil der Seilbahnanlage ankuppelbar. Mittels des Laufwerkes 13 ist der Sessel 1 in den Stationen, in welchen er vom Trag- und Förderseil abgekuppelt ist, längs Führungsschienen 4 durch die Stationen hindurch bewegbar.

Die Sitzflächen der Sessel 1 sind jeweils mit einer Heizeinrichtung ausgebildet. Zur Versorgung dieser Heizeinrichtungen sind an jedem Sessel 1 zwei Batterien 2 und eine Steuereinrichtung 3 vorgesehen, welche sich unterhalb der Sitzfläche befinden. Die Aufladung der Batterien 2 kann einerseits außerhalb der Betriebszeiten der Seilbahnanlage während der Garagierung der Sessel 1 erfolgen. Sie kann andererseits auch während des Betriebes der Seilbahnanlage während der Bewegung der Sessel 1 durch die Stationen hindurch erfolgen. Zudem kann die Aufladung der Batterien 2 mittels fotovoltaischer Elemente erfolgen. Da die Sessel 1 in den Stationen vom Trag- und Förderseil abgekuppelt sind und längs der Führungsschienen 4 mit einer gegenüber der Fördergeschwindigkeit des Trag- und Förderseiles wesentlich verminderten Geschwindigkeit durch die Stationen hindurchgeführt werden, steht für die Speisung der Batterien ein Zeitraum von mindestens 20 sec zur Verfügung.

Wie dies insbesondere aus Fig. 1a ersichtlich ist, befinden sich hierfür in den Stationen Stromschienen 5 mit zwei Stromleitern 51 und 52, welchen an der Tragstange 11 Stromabnehmer 21 und 22 zugeordnet sind. Über diese Stromabnehmer 21 und 22 werden die Batterien 2 während der Durchfahrt der Sessel 1 durch die Stationen hindurch mit Strom gespeist.

Die Steuereinrichtung 3 dient dazu, die Beheizung der Sitzflächen der Sessel 1 zu steuern. Es ist dabei vorgesehen, die Sitzflächen dann zu beheizen, sobald die Sessel 1 in die Stationen einfahren und in der Folge benützt werden, wobei dies insbesondere für diejenigen Sitzflächen der Fall ist, welche bei der Einfahrt der Sessel in die Stationen nicht belegt waren, weswegen sie während deren Bewegung über die Strecke stark abgekühlt wurden.
Vorzugsweise sind hierfür in den Sitzflächen auch Temperatursensoren vorgesehen, deren Ausgänge an die Steuereinrichtungen 3 gelegt sind.

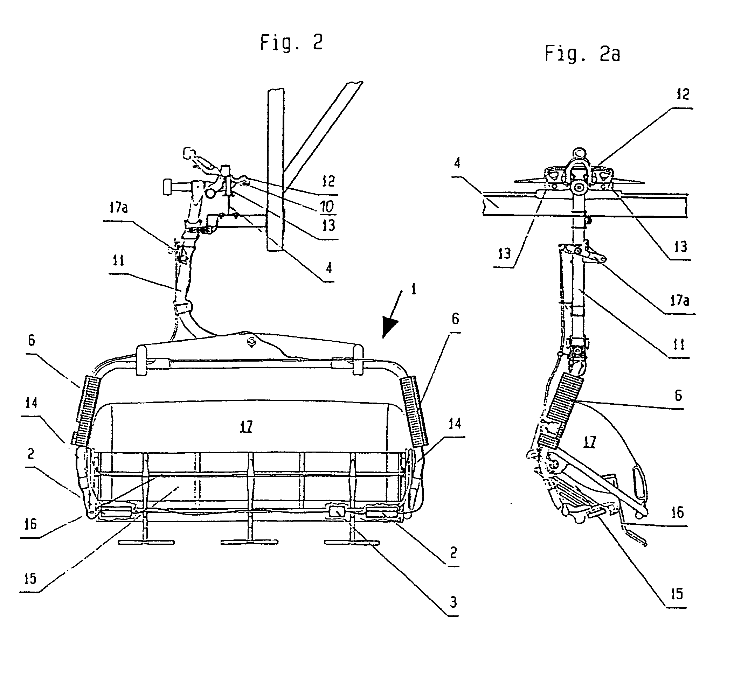

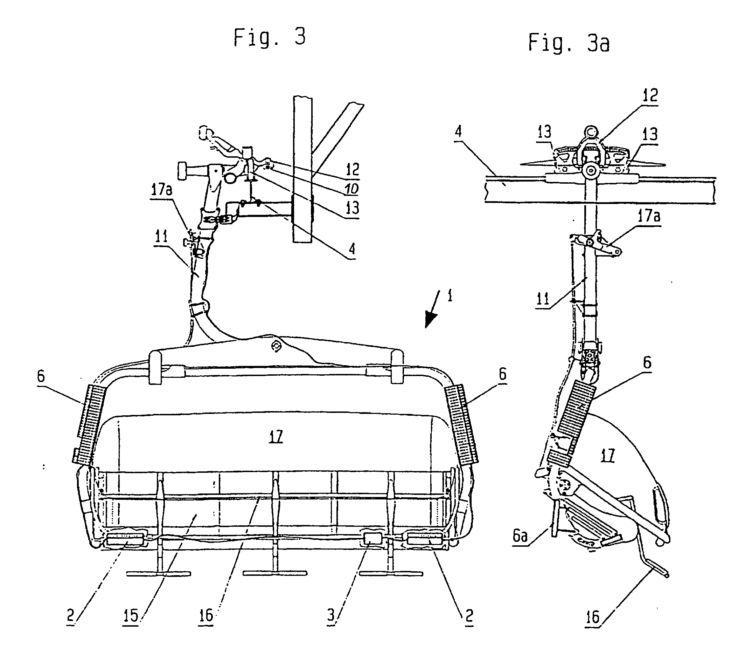

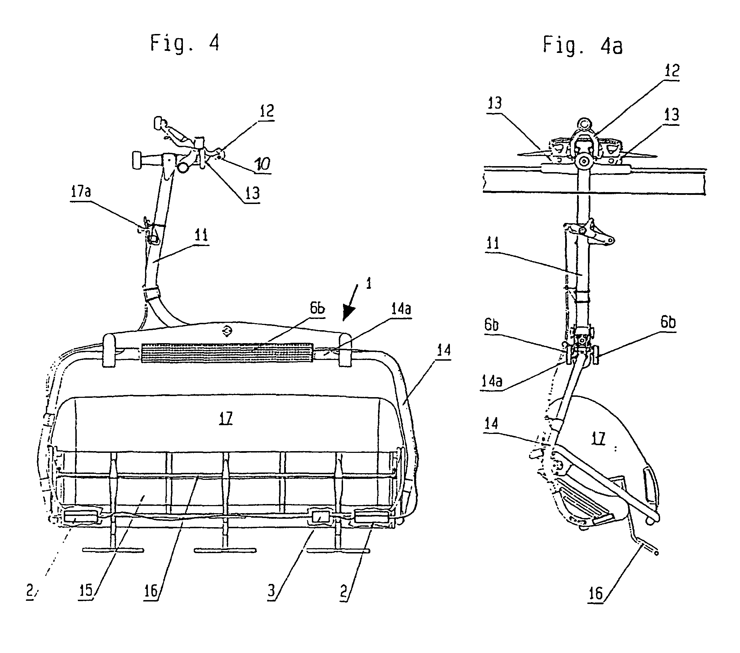

Der in den Fig.2 und 2a dargestellte Sessel 1 unterscheidet sich vom Sessel 1 gemäß Fig. 1 dadurch, daß er auf beiden Seiten des Traggestelles 14 mit fotovoltaischen Elementen 6 ausgebildet ist, durch welche die Batterien 2 auch während der Fahrt der Sessel 1 über die Strecke mit Strom gespeist und dadurch aufgeladen werden.
Beim Ausführungsbeispiel gemäß den Fig.3 und 3a ist an der Rückseite des Sessels 1 ein weiteres fotovoltaisches Element 6a angeordnet.
Beim Ausführungsbeispiel gemäß den Fig.4 und 4a sind an der Vorderseite und an der Rückseite des horizontalen Balkens 14a des Traggestells 14 oberhalb der Sitzbank 15 zwei fotovoltaische Elemente 6b angeordnet.

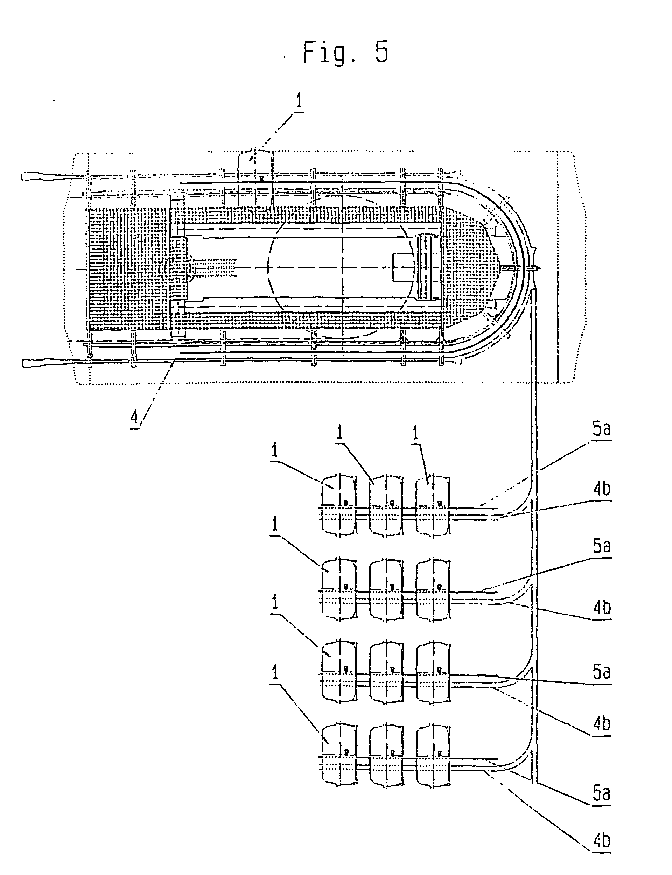

In Fig.5 ist eine der Stationen der Seilbahnanlage dargestellt, durch welche während des Betriebes der Seilbahnanlage die Sessel 1 längs der Führungsschienen 4 hindurch bewegt werden. Dabei ist der Station eine Anlage zur Speicherung der Sessel 1 außerhalb der Betriebszeiten der Seilbahnanlage zugeordnet. Diese Speicheranlage weist eine Mehrzahl von Speicherschienen 4b auf, welche mittels einer Verbindungsschiene 4a an die Führungsschiene 4 anschließbar sind und auf welche die Sessel 1 zu deren Speicherung außerhalb der Betriebszeiten der Seilbahnanlage verschiebbar sind. Den Speicherschienen 4b sind Stromschienen 5a zugeordnet, über welche die Batterien 2 mittels der Stromabnehmer 21, 22 während der Speicherung der Sessel 1 aufladbar sind.

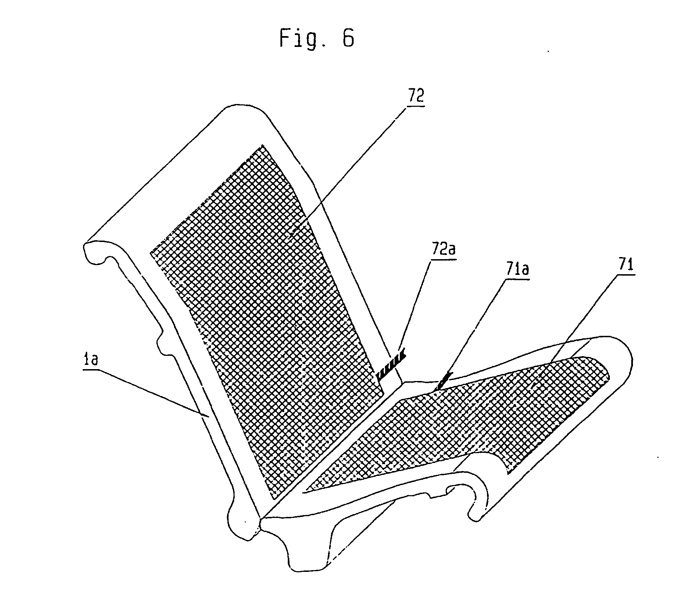

In Fig.6 ist schließlich ein Sitz 1a dargestellt, welcher sowohl in seinem Sitzbereich als auch in seinem Rückenbereich mit Heizelementen 71 und 72 ausgebildet ist, welche über Anschlüsse 71a und 72a unter Zwischenschaltung der Steuerschaltung 3 an die Batterien 2 angeschlossen sind.

## Patentansprüche

1. Seilbahnanlage mit einem Trag- und Förderseil und mit einer Vielzahl von Sesseln (1), welche mit Kupplungseinrichtungen (12) versehen sind, mittels welcher sie an das Trag- und Förderseil ankuppelbar sind, wobei die Sessel mit elektrischen Heizeinrichtungen ausgebildet sind, **dadurch gekennzeichnet, dass** die Sitze (1a) der Sessel (1) mit an sich bekannten elektrischen Heizelementen (71, 72) ausgebildet sind, dass die Sessel (1) mit Batterien (2), durch welche diese Heizelemente (71, 72) speisbar sind, versehen sind sowie dass weiters die Sessel (1) mit Einrichtungen (5, 6) zum Aufladen der Batterien (2) ausgebildet sind.

2. Seilbahnanlage nach Anspruch 1, **dadurch gekennzeichnet, dass** die Sessel (1) mit Steuereinrichtungen (3) ausgebildet sind, durch welche eine Steuerung der Beheizung der Sitze (1a) erfolgt.

3. Seilbahnanlage nach einem der Ansprüche 1 und 2, **dadurch gekennzeichnet, dass** in den Stationen Stromschienen (5a) vorgesehen sind, mittels welcher die Aufladung der Batterien (2) während der Garagierung der Sessel (1) erfolgt.

4. Seilbahnanlage nach einem der Ansprüche 1 bis 3, **dadurch gekennzeichnet, dass** in den Stationen Stromschienen (5) vorgesehen sind, mittels welcher die Aufladung der Batterien (2) während der Bewegung der Sessel (1) durch die Stationen hindurch erfolgt.

5. Seilbahnanlage nach einem der Ansprüche 1 bis 4, **dadurch gekennzeichnet, dass** die Sessel (1) mit photovoltaischen Elementen (6, 6a, 6b) ausgebildet sind, welche zur Aufladung der Batterien (2) dienen.

6. Verfahren zum Aufladen der Batterien, welche an den Sesseln von Seilbahnanlagen vorgesehen sind und welche zur Beheizung der Sitze dienen, **dadurch gekennzeichnet, dass** die Sessel (1) mit Stromabnehmern (21, 22) ausgebildet sind, welchen in den Stationen Stromleiter (51, 52) zugeordnet sind, wobei die Batterien (2) während der Durchfahrt der Sessel (1) durch die Stationen hindurch mit Strom gespeist werden.

## Claims

1. An aerial cableway installation having a carrying and hauling cable and having a plurality of chairs (1), which are provided with coupling means (12), by means of which they may be coupled to the carrying and hauling cable, the chairs being provided with electrical heating means, **characterised in that** the seats (1a) of the chairs (1) are provided with electrical heating elements (71, 72) known per se, **in that** the chairs (1) are provided with batteries (2), by means of which these heating elements (71, 72) may be powered, and **in that** the chairs (1) are additionally provided with means (5, 6) for charging the batteries (2).

2. An aerial cableway installation according to claim 1, **characterised in that** the chairs (1) are provided with control means (3), by means of which the heating of the seats (1a) is controlled.

3. An aerial cableway installation according to either one of claims 1 and 2, **characterised in that** live rails (5a) are provided in the stations, by means of which the batteries (2) are charged during garaging of the chairs (1).

4. An aerial cableway installation according to any one of claims 1 to 3, **characterised in that** live rails (5) are provided in the stations, by means of which the batteries (2) are charged during movement of the chairs (1) through the stations.

5. An aerial cableway installation according to any one of claims 1 to 4, **characterised in that** the chairs (1) are provided with photovoltaic elements (6, 6a, 6b), which serve to charge the batteries.

6. A method of charging the batteries provided on the chairs of aerial cableway installations and serving to heat the seats, **characterised in that** the chairs (1) are provided with current collectors (21, 22), with which conductors (51, 52) are associated in the stations, wherein the batteries (2) are supplied with power during passage of the chairs (1) through the stations.

## Revendications

1. Téléphérique comprenant un câble porteur et tracteur et une multiplicité de nacelles (1) pourvues de dispositifs d'accouplement (12) grâce auxquels lesdites nacelles (1) peuvent être accouplées au câble porteur et tracteur, les nacelles étant pourvues de dispositifs de chauffage électriques, **caractérisé en ce que** les sièges (1a) des nacelles (1) sont pourvus d'éléments chauffants électriques (71, 72) connus en soi, **en ce que** les nacelles (1) sont pourvues de batteries (2) grâce auxquelles ces éléments chauffants (71, 72) peuvent être alimentés, et **en ce que** les nacelles (1) sont également pourvues de dispositifs (5, 6) pour charger les batteries (2).

2. Téléphérique selon la revendication 1, **caractérisé en ce que** les nacelles (1) sont pourvues de dispositifs de commande (3) grâce auxquels le chauffage des sièges (1a) est commandé.

3. Téléphérique selon l'une des revendications 1 et 2, **caractérisé en ce qu'**il est prévu dans les stations des rails conducteurs (5a) à l'aidé desquels le chargement des batteries (2) se fait pendant que les nacelles (1) sont au garage.

4. Téléphérique selon l'une des revendications 1 à 3, **caractérisé en ce qu'**il est prévu dans les stations des rails conducteurs (5) à l'aide desquels le chargement des batteries (2) se fait pendant que les nacelles (1) traversent les stations.

5. Téléphérique selon l'une des revendications 1 à 4, **caractérisé en ce que** les nacelles (1) sont pourvues d'éléments photovoltaïques (6, 6a, 6b) qui servent à charger les batteries (2).

6. Procédé pour charger les batteries qui sont prévues sur les nacelles de téléphériques et qui servent à chauffer les sièges, **caractérisé en ce que** les nacelles (1) sont pourvues de collecteurs de courant (21, 22) auxquels sont associés des conducteurs (51, 52) dans les stations, les batteries (2) étant alimentées en courant pendant que les nacelles (1) traversent les stations.
